# DEMANDE DE BREVET EUROPEEN

(11) **EP 1 251 711 A1**
(43) Date de publication de la demande: **23.10.2002**
(21) Numéro de dépôt: 02290992.3
(22) Date de dépôt: 18.04.2002
(51) Int. Cl.: H04Q 7/38

(54) **Ensemble de téléphonie mobile, balise, et procédé de détection de proximité entre un terminal et une balise**

(30) Priorité: 18.04.2001 FR 0105263
(71) Demandeur: Inventio, 75008 Paris (FR)
(72) Inventeur: Trichet, Alexis, 75005 Paris (FR)
(74) Mandataire: Remy, Vincent Noel Paul

(57) **Abrégé**

Cet ensemble de téléphonie mobile comporte un terminal (2) d'accès à un réseau (22) de télécommunication mobile et au moins une balise (4) comprenant des premiers moyens (10) d'émission, avec une portée prédéterminée, d'un premier signal comportant des informations d'identification, le terminal (2) comprenant des moyens (14) de réception de ce premier signal lorsqu'il se trouve à portée de la balise (4) et des seconds moyens (20) d'émission, vers le réseau de télécommunication mobile, d'un second signal d'indication de proximité entre le terminal (2) et la balise (4).

La balise (4) comprend en outre, d'une part des moyens (6) de connexion amovible à au moins une borne fixe (8) prédéterminée, et d'autre part des moyens (12) d'activation des premiers moyens d'émission (10) uniquement lorsqu'elle est connectée à la borne fixe (8).

## Description

La présente invention concerne un ensemble de téléphonie mobile.

Plus précisément, l'invention concerne un ensemble de téléphonie mobile comportant un terminal d'accès à un réseau de télécommunication mobile et au moins une balise comprenant des premiers moyens d'émission, avec une portée prédéterminée, d'un premier signal comportant des informations d'identification, le terminal comprenant des moyens de réception de ce premier signal lorsqu'il se trouve à portée de la balise et des seconds moyens d'émission, vers le réseau de télécommunication mobile, d'un second signal d'indication de proximité entre le terminal et la balise.

Un tel ensemble de téléphonie mobile est décrit dans la demande de brevet internationale WO 95/19688, publiée le 20 juillet 1995, au nom de Nortel Matra Cellular. Dans cet ensemble, la balise est, par exemple, installée au domicile d'un utilisateur. Ainsi, lorsque l'utilisateur est chez lui, à proximité de la balise, son terminal mobile en avertit le réseau de télécommunication mobile, de sorte qu'un service privilégié peut lui être proposé, s'il utilise son terminal mobile depuis son domicile.

Cependant, pour éviter toute possibilité de fraude de la part de l'utilisateur, la balise doit être scellée de façon inamovible. Une telle installation nécessite l'intervention d'un installateur certifiant sa sûreté, ce qui entraîne un surcoût. De plus, si l'utilisateur souhaite bénéficier du service privilégié, non seulement à son domicile principal, mais aussi dans une résidence secondaire, par exemple, il doit alors acheter une deuxième balise, ce qui est contraignant pour lui.

L'invention vise à remédier aux inconvénients d'un ensemble de téléphonie mobile classique, en créant un ensemble de téléphonie mobile capable de déterminer que le terminal d'accès au réseau de télécommunication mobile est situé à proximité de la balise lorsque celle-ci est installée à son domicile ou à un autre endroit prédéterminé, et qui, de plus, soit fiable et peu coûteux pour l'installateur comme pour l'utilisateur.

L'invention a donc pour objet un ensemble de téléphonie mobile comportant un terminal d'accès à un réseau de télécommunication mobile et au moins une balise comprenant des premiers moyens d'émission, avec une portée prédéterminée, d'un premier signal comportant des informations d'identification, le terminal comprenant des moyens de réception de ce premier signal lorsqu'il se trouve à portée de la balise et des seconds moyens d'émission, vers le réseau de télécommunication mobile, d'un second signal d'indication de proximité entre le terminal et la balise, caractérisé en ce que la balise comprend en outre, d'une part, des moyens de connexion amovible à au moins une borne fixe prédéterminée, et d'autre part, des moyens d'activation des premiers moyens d'émission uniquement lorsqu'elle est connectée à la borne fixe.

Ainsi, un ensemble de téléphonie mobile selon l'invention permet à un utilisateur de se déplacer avec le terminal et la balise. Dès qu'il se trouve à proximité de la borne fixe, il lui suffit de connecter la balise à cette borne pour pouvoir indiquer au réseau de télécommunication mobile qu'il se trouve à sa portée et bénéficier, par exemple, d'une offre tarifaire spécifique.

L'ensemble de téléphonie mobile selon l'invention peut, en outre, comporter l'une ou plusieurs des caractéristiques suivantes :
- il comporte un serveur de surveillance des appels émis et/ou reçus par le terminal d'accès, connecté au réseau de télécommunication mobile et vers lequel est transmis le second signal ;
- il comporte des moyens de facturation des appels émis et/ou reçus par le terminal d'accès en fonction du second signal, ces moyens de facturation étant associés au serveur de surveillance ;
- la borne fixe est une prise d'accès à un réseau d'alimentation en énergie électrique ;
- l'ensemble comporte un dispositif de chargement d'une batterie d'alimentation en énergie électrique du terminal, dans lequel est intégrée la balise ;
- les premiers moyens d'émission de la balise et les moyens de réception du terminal échangent des informations selon un protocole de communication à courte distance ;
- le protocole de communication à courte distance utilise la technologie Bluetooth™;
- les informations d'identification comportent l'adresse physique Bluetooth™ de la balise ;
- la portée de la balise est inférieure à 100 mètres, et la puissance des premiers moyens d'émission est comprise entre 1 mW et 100 mW ;
- le terminal comporte un écran et des moyens d'affichage d'un icone sur cet écran, en cas de réception du premier signal par les moyens de réception ; et
- les moyens de connexion amovible sont indémontables de la balise.

L'invention a également pour objet une balise comprenant des moyens d'émission, avec une portée prédéterminée, d'un signal comportant des informations d'identification, caractérisée en ce qu'elle comprend en outre, d'une part, des moyens de connexion amovible à au moins une borne fixe prédéterminée et, d'autre part, des moyens d'activation des moyens d'émission uniquement lorsqu'elle est connectée à la borne fixe.

L'invention a également pour objet un procédé de détection de proximité, entre un terminal d'accès à un réseau de télécommunication mobile et une balise, comportant les étapes suivantes :
- émission par la balise, avec une portée prédéterminée, d'un premier signal comportant des informations d'identification ; et
- réception de ce premier signal par le terminal, lorsqu'il se trouve à portée de la balise,
caractérisé en ce que, suite à l'initialisation d'un appel émis ou reçu par le terminal, il comporte une étape de transmission, par le terminal, vers le réseau de télécommunication, d'un second signal d'indication de proximité entre le terminal et la balise.

Le procédé de détection de proximité selon l'invention peut en outre, comporter l'une ou plusieurs des caractéristiques suivantes :
- lorsque l'appel est émis par le terminal, l'initialisation correspond au moment de la demande d'établissement de l'appel par le terminal ;
- l'initialisation correspond au moment où une connexion relative à l'appel émis ou reçu est établie ;
- le second signal d'indication de proximité entre le terminal et la balise est transmis sous forme d'un message de type SMS ;
- un serveur de surveillance étant connecté au réseau de télécommunication mobile, le procédé comporte une étape d'alerte, lors de laquelle le serveur de surveillance est informé en temps réel par le réseau de télécommunication mobile de l'émission ou de la réception d'un appel par le terminal et des paramètres principaux de l'appel ;
- le terminal transmet le second signal d'indication de proximité à destination du serveur de surveillance, en réponse à une requête d'indication de proximité entre le terminal et la balise, émise par le serveur de surveillance à destination du terminal ;
- la requête d'indication de proximité est transmise sous forme d'un message de type SMS ;
- des moyens de facturation des appels étant connectés au réseau de télécommunication mobile, il comporte en outre une étape de sélection, par les moyens de facturation, d'une tarification d'un appel émis ou reçu par le terminal, en fonction dudit second signal d'indication de proximité ;
- le procédé comporte une étape préalable de connexion, de façon amovible, de la balise à une borne fixe prédéterminée, et l'étape d'émission du premier signal est autorisée uniquement lorsque la balise est connectée à la borne fixe ; et
- le procédé comporte une étape, déclenchée par l'initialisation de l'appel, lors de laquelle le terminal émet une requête dans son voisinage pour déterminer si la balise se trouve à sa portée.

L'invention sera mieux comprise à la lecture de la description qui va suivre, donnée uniquement à titre d'exemple et faite en se référant aux dessins annexés, sur lesquels :
- la figure 1 est une vue schématique de la structure générale d'un ensemble de téléphonie mobile selon l'invention ;
- la figure 2 représente, sous forme d'un organigramme, un procédé de détection de proximité selon un premier mode de réalisation de l'invention ;
- la figure 3 représente, sous forme d'un organigramme, un procédé de détection de proximité selon un second mode de réalisation de l'invention ; et
- la figure 4 représente, sous forme d'un organigramme, un procédé d'enregistrement d'informations d'identification, mis en oeuvre dans l'ensemble de téléphonie mobile de la figure 1.

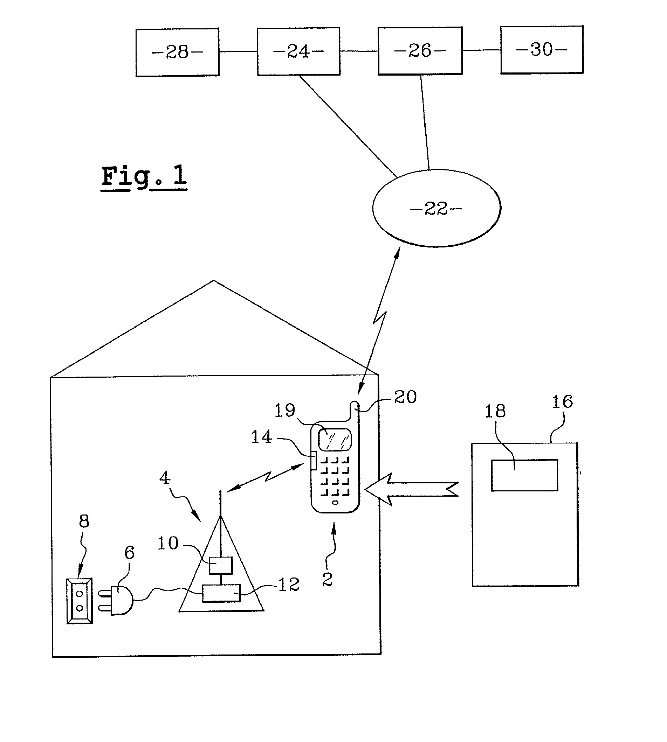

L'ensemble de téléphonie mobile représenté à la figure 1 comporte un téléphone mobile 2 et une balise déplaçable 4.

La balise déplaçable 4 comporte des moyens 6 de connexion amovible à au moins une borne fixe 8 prédéterminée. Ceux-ci sont indémontables de la balise, pour empêcher quiconque de les remplacer par des moyens de connexion à une autre borne que la borne prédéterminée 8.

La balise comporte en outre des premiers moyens 10 d'émission d'un premier signal comportant des informations d'identification, reliés à des moyens 12 d'activation de ces premiers moyens d'émission 10.

Les premiers moyens d'émission 10 sont adaptés pour émettre le premier signal à une puissance comprise entre 1 mW et 100 mW et utilisent la technologie Bluetooth™.

Les moyens d'activation 12 autorisent l'émission du premier signal comportant les informations d'identification par les premiers moyens d'émission 10, uniquement lorsque la balise 4 est connectée à la borne fixe 8, grâce aux moyens de connexion 6.

La borne fixe 8 est, de préférence, une prise femelle d'accès à un réseau fixe tel que, par exemple, un réseau d'alimentation en énergie électrique, tandis que les moyens de connexion 6 sont une prise mâle correspondante. La borne fixe 8 est ainsi, par exemple, l'une quelconque des prises femelles électriques installées au domicile, dans une résidence secondaire ou sur le lieu de travail de l'utilisateur.

Les moyens d'activation 12 peuvent, par exemple, détecter la fréquence fixe de 50 ou 60 Hz du réseau d'alimentation en énergie électrique, pour déterminer si la prise mâle 6 est branchée dans la prise femelle 8.

En outre, la balise 4 est intégrée dans un dispositif de chargement d'une batterie d'alimentation du téléphone mobile 2.

Le téléphone mobile 2 comporte des moyens de réception 14 du premier signal émis par la balise 4. Ces moyens de réception 14 ne peuvent recevoir le premier signal que lorsque le téléphone mobile 2 se trouve à portée de la balise 4, c'est-à-dire, par exemple, à une distance inférieure à 100 mètres. D'autre part, ils utilisent également la technologie Bluetooth™.

En outre, le téléphone mobile 2 comporte, de façon classique, un module 16, de type carte SIM (*Subscriber Identity Module*, c'est-à-dire «module d'identité d'abonné»). Une copie 18 des informations d'identification émises par la balise 4 est stockée dans cette carte SIM.

Par exemple, les informations d'identification comprennent l'adresse physique de la balise, définie de façon unique par le protocole Bluetooth™.

Le téléphone mobile comporte également un écran de visualisation 19 et des moyens d'affichage d'un icone sur cet écran 19, en cas de réception du premier signal par les moyens de réception 14.

Enfin, le téléphone mobile 2 comporte, de façon classique, des moyens 20 d'échange d'informations avec un réseau de télécommunication mobile 22 de type classique. Ce réseau est, par exemple, un réseau de type GSM.

Un serveur de surveillance 24 est connecté au réseau 22 de télécommunication mobile qui l'informe en temps réel des appels émis et/ou reçus par le téléphone mobile 2 et des paramètres principaux de ces appels. Ces paramètres principaux comportent notamment les numéros téléphoniques de l'appelé et de l'appelant, l'instant de demande d'établissement d'un appel au réseau 22 de télécommunication mobile, le début et la fin d'une connexion.

Le serveur de surveillance 24 est également connecté à un serveur de messages courts 26, lui aussi connecté au réseau 22 de télécommunications mobiles, pour l'émission et/ou la réception, à destination ou en provenance du réseau 22, de messages de type SMS (*Short Message Service*, c'est-à-dire «service de messages courts»).

Par ailleurs, le serveur de surveillance 24 est connecté à un système 28 de facturation des appels émis et/ou reçus par le téléphone mobile 2.

Enfin, un serveur 30 d'enregistrement d'informations d'identification est connecté au serveur de messages courts 26, pour l'enregistrement de la copie 18 des informations d'identification, dans la carte SIM 16.

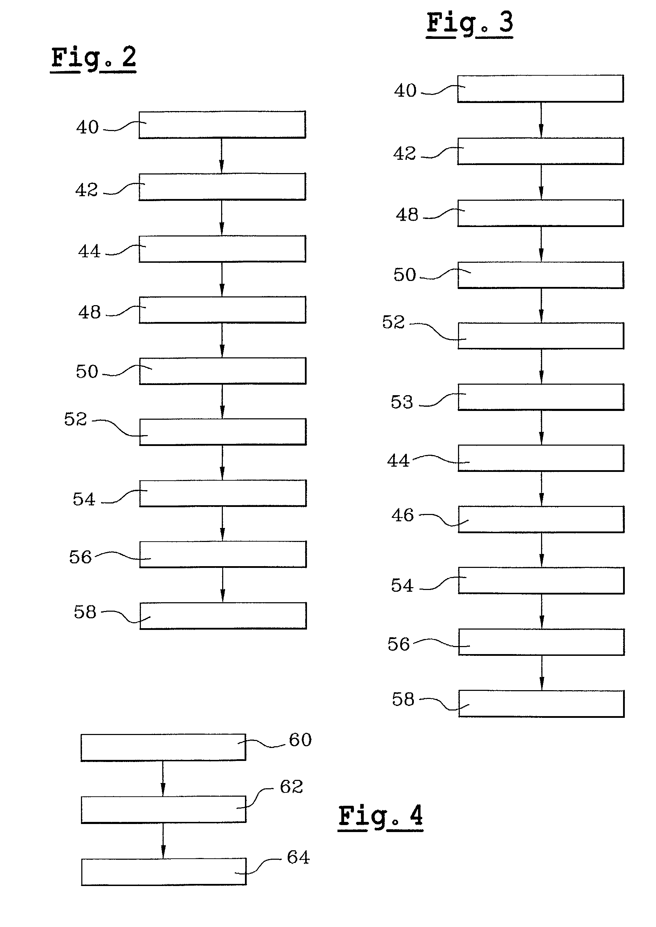

Le fonctionnement de l'ensemble de téléphonie mobile de la figure 1 va maintenant être décrit en référence aux figures 2, 3 et 4.

Selon un premier mode de réalisation de l'invention, le procédé de détection de proximité représenté à la figure 2 comporte une première étape 40. Lors de cette étape 40, l'utilisateur branche la balise 4 sur la prise électrique 8. Dès que le branchement est établi, la balise 4 se met en mode d'écoute.

Lors d'une étape 42 suivante, le téléphone mobile 2 initialise l'émission ou la réception d'un appel en direction ou en provenance du réseau de télécommunication mobile 22.

Dans ce mode de réalisation, on entend par initialisation le moment où une connexion relative à l'appel émis ou reçu est établie.

Lors d'une étape d'alerte 44, le serveur de surveillance 24 est informé en temps réel par le réseau de télécommunication mobile 22 de l'émission ou de la réception d'un appel par le terminal 2 et des paramètres principaux de l'appel. Cette étape d'alerte 44 est active jusqu'à la fin de l'appel.

Ensuite, lors d'une étape 48 déclenchée par l'initialisation de l'appel émis ou reçu par le téléphone mobile 2 à l'étape 42, le téléphone mobile 2 émet une requête en utilisant le protocole Bluetooth™, afin de déterminer si, parmi les différents appareils équipés de la technologie Bluetooth™ situés dans son voisinage, se trouve la balise 4. Cette requête est par exemple émise de façon répétée pendant une durée de dix secondes.

Lors d'une étape 50, la balise 4 émet le premier signal comportant les informations d'identification, en réponse à la requête de l'étape 48.

Ce signal est reçu par le téléphone mobile 2 lors d'une étape 52. Lors de cette même étape, celui-ci compare les informations d'identification émises par la balise 4 à la copie 18 de ces informations, stockée dans sa carte SIM 16.

Ensuite, lors d'une étape 54, le téléphone mobile 2 transmet au serveur de surveillance 24, à travers le réseau 22, un second signal d'indication de proximité entre le téléphone mobile 2 et la balise 4.

Ce signal est transmis sous forme d'un message de type SMS, via le serveur de messages courts 26. Il comporte une valeur booléenne positive, lorsque les informations d'identification émises par la balise et reçues par le téléphone mobile correspondent à la copie 18 de ces informations stockées dans la carte SIM 16, et une valeur booléenne nulle, lorsque aucune des informations d'identifications reçues par le téléphone mobile 2 en provenance de son environnement proche ne correspond à cette copie 18.

De façon classique, le téléphone mobile 2 reçoit un avis de délivrance du message SMS. Si celui-ci est négatif, le téléphone mobile 2 renvoie un autre message SMS identique au précédent.

Lors de l'étape 56 suivante, le serveur de surveillance 24 extrait la valeur booléenne du message SMS reçu de la part du serveur de messages courts 26, et la transmet au système de facturation 28.

Enfin, lors d'une dernière étape 58 de sélection, le système de facturation 28 sélectionne une tarification à appliquer à l'appel émis ou reçu par le téléphone mobile, en fonction de la valeur booléenne. En effet, si la valeur booléenne est positive, indiquant la présence de la balise 4 à portée du téléphone mobile 2, le système de facturation sélectionne une offre tarifaire spécifique, pour tenir compte du fait que l'utilisateur utilise son téléphone mobile à proximité de la prise électrique 8.

Selon un second mode de réalisation de l'invention, le procédé de détection de proximité représenté à la figure 3 comporte deux premières étapes 40 et 42 identiques aux étapes 40 et 42 du premier mode de réalisation. Ces deux étapes, ainsi que d'autres qui, parmi les étapes suivantes de ce second mode de réalisation, sont identiques à des étapes du premier mode de réalisation, ne seront pas décrites.

Dans ce second mode de réalisation, on entend par initialisation le moment de la demande d'établissement de l'appel par le téléphone mobile 2, lorsque celui-ci émet l'appel, et le moment où une connexion relative à l'appel est établie, lorsque le téléphone mobile 2 reçoit l'appel.

Les trois étapes suivantes 48, 50 et 52 sont identiques à celles du premier mode de réalisation. Cependant, dans ce second mode de réalisation, la requête de l'étape 48 est, par exemple, émise de façon répétée pendant une durée de trois secondes.

Ensuite, lors d'une étape 53, le téléphone mobile 2 présente sur son écran 19 le résultat de l'étape 52, c'est-à-dire la présence ou l'absence de la balise 4 à proximité, sous forme d'un icone. L'utilisateur peut alors choisir de valider ou non l'appel. Si l'appel est validé, on passe alors à une étape 44 identique à l'étape 44 du premier mode de réalisation.

Suite à l'étape 44, lors d'une étape 46, le serveur de surveillance 24 transmet une requête d'indication de proximité entre le téléphone mobile 2 et la balise 4 à destination du téléphone mobile 2, à travers le réseau de télécommunication mobile 22. Cette requête peut être émise sous forme d'un message de type SMS, via le serveur de messages courts 26.

Ensuite, les trois dernières étapes 54, 56 et 58 de ce mode de réalisation sont identiques aux trois dernières étapes du premier mode de réalisation.

Le procédé d'enregistrement d'une copie des informations d'identification de l'utilisateur dans la carte SIM 16, représenté à la figure 4, comporte une première étape 60 de sélection d'informations d'identification de l'utilisateur par le serveur d'enregistrement 30. Les informations d'identification sélectionnées sont celles qui correspondent à celles émises par la balise 4.

Lors d'une étape suivante 62 d'émission, le serveur d'enregistrement 30 transmet au téléphone mobile 2, via le serveur de messages courts 26, un message de type SMS comportant la copie 18 des informations d'identification sélectionnées.

Enfin, lors d'une dernière étape 64 d'enregistrement, le téléphone mobile 2 stocke automatiquement cette copie 18 dans la carte SIM 16.

Il apparaît clairement que l'ensemble de téléphonie mobile selon l'invention permet de faciliter l'application d'une offre tarifaire spécifique sans risque de fraude, lorsque l'utilisateur d'un téléphone mobile se trouve à proximité d'une borne fixe prédéterminée, en fournissant une balise déplaçable, activée uniquement lorsqu'elle est connectée à cette borne fixe prédéterminée.

On notera enfin que l'invention n'est pas limitée au mode de réalisation décrit.

Ainsi, en variante, la balise 4 est remplacée par une multiplicité de balises, pour en augmenter la portée.

En variante également, le réseau 22 de télécommunication mobile est un réseau de type GPRS (*Général Packet Radio Service*), UMTS (*Universal Mobile Télécommunications System*), WCDMA (*Wideband Code Division Multiple Access*), D-AMPS (*Digital American Mobile Phone System*), CDMA (*Code Division Multiple Access*) ou CDMA 2000.

En variante également, la balise 4 est intégrée dans un équipement électronique différent du dispositif de chargement d'une batterie d'alimentation du téléphone mobile. Cet équipement électronique est par exemple un décodeur ou un écran vidéo.

En variante également, les premiers moyens d'émission de la balise et les moyens de réception du téléphone mobile échangent des informations selon un protocole de communication à courte distance choisi par exemple parmi les protocoles Home^{RF}, DECT ou IrDA.

En variante également, les messages de type SMS échangés entre le téléphone mobile et le serveur de surveillance sont remplacés par des messages de type USSD (*Unstructured Supplementary Service Data*).

Enfin, en variante, l'initialisation de l'appel émis et/ou reçu, dans le premier mode de réalisation décrit, correspond à la réception d'un message de signalisation en provenance du réseau de télécommunication mobile pendant la phase d'établissement de l'appel.

## Revendications

1. Ensemble de téléphonie mobile comportant un terminal (2) d'accès à un réseau (22) de télécommunication mobile et au moins une balise (4) comprenant des premiers moyens (10) d'émission, avec une portée prédéterminée, d'un premier signal comportant des informations d'identification, le terminal (2) comprenant des moyens (14) de réception de ce premier signal lorsqu'il se trouve à portée de la balise (4) et des seconds moyens (20) d'émission, vers le réseau (22) de télécommunication mobile, d'un second signal d'indication de proximité entre le terminal (2) et la balise (4), **caractérisé en ce que** la balise (4) comprend en outre, d'une part, des moyens (6) de connexion amovible à au moins une borne fixe (8) prédéterminée, et d'autre part des moyens (12) d'activation des premiers moyens d'émission (10) uniquement lorsqu'elle est connectée à la borne fixe (8).

2. Ensemble de téléphonie mobile selon la revendication 1, **caractérisé en ce qu'**il comporte un serveur de surveillance (24) des appels émis et/ou reçus par le terminal d'accès (2), connecté au réseau (22) de télécommunication mobile et vers lequel est transmis le second signal.

3. Ensemble de téléphonie mobile selon la revendication 2, **caractérisé en ce qu'**il comporte des moyens (28) de facturation des appels émis et/ou reçus par le terminal d'accès (2) en fonction du second signal, ces moyens de facturation étant associés au serveur de surveillance (24)

4. Ensemble de téléphonie mobile selon l'une quelconque des revendications 1 à 3, **caractérisé en ce que** la borne fixe (8) est une prise d'accès à un réseau d'alimentation en énergie électrique.

5. Ensemble de téléphonie mobile selon la revendication 4, **caractérisé en ce qu'**il comporte un dispositif de chargement d'une batterie d'alimentation en énergie électrique du terminal (2), dans lequel est intégrée la balise (4).

6. Ensemble de téléphonie mobile selon l'une quelconque des revendications 1 à 5, **caractérisé en ce que** les premiers moyens d'émission (10) de la balise (4) et les moyens de réception (14) du terminal (2) échangent des informations selon un protocole de communication à courte distance.

7. Ensemble de téléphonie mobile selon la revendication 6, **caractérisé en ce que** le protocole de communication à courte distance utilise la technologie Bluetooth™.

8. Ensemble de téléphonie mobile selon la revendication 7, **caractérisé en ce que** les informations d'identification comportent l'adresse physique Bluetooth™ de la balise (4).

9. Ensemble de téléphonie mobile selon l'une quelconque des revendications 1 à 8, **caractérisé en ce que** la portée de la balise (4) est inférieure à 100 mètres, et **en ce que** la puissance des premiers moyens d'émission (10) est comprise entre 1 mW et 100 mW.

10. Ensemble de téléphonie mobile selon l'une quelconque des revendications 1 à 9, **caractérisé en ce que** le terminal (2) comporte un écran (19) et des moyens d'affichage d'un icone sur cet écran, en cas de réception du premier signal par les moyens de réception (14).

11. Ensemble de téléphonie mobile selon l'une quelconque des revendications 1 à 10, **caractérisé en ce que** les moyens de connexion amovible (6) sont indémontables de la balise (4).

12. Balise (4) comprenant des moyens d'émission (10), avec une portée prédéterminée, d'un signal comportant des informations d'identification, **caractérisée en ce qu'**elle comprend en outre, d'une part, des moyens (6) de connexion amovible à au moins une borne fixe (8) prédéterminée et, d'autre part, des moyens (12) d'activation des moyens d'émission (10) uniquement lorsqu'elle est connectée à la borne fixe.

13. Procédé de détection de proximité, entre un terminal (2) d'accès à un réseau (22) de télécommunication mobile et une balise (4), comportant les étapes suivantes :
- émission (50) par la balise, avec une portée prédéterminée, d'un premier signal comportant des informations d'identification ; et
- réception (52) de ce premier signal par le terminal, lorsqu'il se trouve à portée de la balise,
**caractérisé en ce que**, suite à l'initialisation (42) d'un appel émis ou reçu par le terminal, il comporte une étape de transmission (54), par le terminal, vers le réseau de télécommunication, d'un second signal d'indication de proximité entre le terminal et la balise, **en ce qu'**il comporte une étape préalable de connexion (40), de façon amovible, de la balise (4) à une borne fixe (8) prédéterminée, et **en ce que** l'étape d'émission (50) du premier signal est autorisée uniquement lorsque la balise est connectée à la borne fixe.

14. Procédé de détection de proximité selon la revendication 13, **caractérisé en ce que**, lorsque l'appel est émis par le terminal (2), l'initialisation (42) correspond au moment de la demande d'établissement de l'appel par le terminal.

15. Procédé de détection de proximité selon la revendication 13, **caractérisé en ce que** l'initialisation (42) correspond au moment où une connexion relative à l'appel émis ou reçu est établie.

16. Procédé de détection de proximité selon l'une quelconque des revendications 13 à 15, **caractérisé en ce que** le second signal d'indication de proximité entre le terminal (2) et la balise (4) est transmis sous forme d'un message de type SMS.

17. Procédé de détection de proximité selon l'une quelconque des revendications 13 à 16, **caractérisé en ce que**, un serveur de surveillance (24) étant connecté au réseau de télécommunication mobile (22), le procédé comporte une étape d'alerte (44), lors de laquelle le serveur de surveillance (24) est informé en temps réel par le réseau de télécommunication mobile (22) de l'émission ou de la réception d'un appel par le terminal (2) et des paramètres principaux de l'appel.

18. Procédé de détection de proximité selon la revendication 17, **caractérisé en ce que** le terminal (2) transmet le second signal d'indication de proximité à destination du serveur de surveillance (24), en réponse à une requête (46) d'indication de proximité entre le terminal et la balise, émise par le serveur de surveillance à destination du terminal.

19. Procédé de détection de proximité selon la revendication 18, **caractérisé en ce que** la requête (46) d'indication de proximité est transmise sous forme d'un message de type SMS.

20. Procédé de détection de proximité selon l'une quelconque des revendications 13 à 19, **caractérisé en ce que**, des moyens (28) de facturation des appels étant connectés au réseau de télécommunication mobile (22), il comporte en outre une étape de sélection (58), par les moyens de facturation, d'une tarification d'un appel émis ou reçu par le terminal (2), en fonction dudit second signal d'indication de proximité.

21. Procédé de détection de proximité selon l'une quelconque des revendications 13 à 20, **caractérisé en ce qu'**il comporte une étape (48), déclenchée par l'initialisation (42) de l'appel, lors de laquelle le terminal (2) émet une requête dans son voisinage pour déterminer si la balise (4) se trouve à sa portée.
